# EUROPEAN PATENT SPECIFICATION

(11) **EP 0 739 775 B1**
(45) Date of publication and mention of the grant of the patent: **04.07.2001**
(21) Application number: 96201006.2
(22) Date of filing: 23.04.1996
(51) Int. Cl.: B60R 13/10

(54) **License plate holder and clip to be used therewith**
Kennzeichenschild-Halterung und damit verwendete Klammer
Attache pour plaque minéralogique et agrafe associée

(30) Priority: 26.04.1995 NL 1000226
(43) Date of publication of application: 30.10.1996
(73) Proprietor: Industrial Services Bestevaer B.V., 6673 XT Andelst (NL)
(72) Inventor: Van der Veen, Bernardus Johannes, 6673 XT Andelst (NL)
(74) Representative: Bakker, Gilles Egbert, Ir.

(56) References cited:
- EP-A- 0 519 288
- AT-A- 394 165
- DE-A- 4 040 647
- DE-U- 9 213 304
- DE-U- 9 400 768

## Description

The invention pertains to a license plate holder for a vehicle of essentially rectangular shape with a short side and a long side, having a back plate with a circumferential frame and license plate support parts, the circumferential frame being provided with a recess to receive an edge of a license plate along at least one of the long sides of the holder, and the space between the license plate support parts and the recess seen in a direction perpendicular to the plane of the back plate being sufficient to receive a license plate, the license plate holder furthermore comprising resilient clips to hold the license plate by dropping over a corner of the license plate, the clips having locking means which cooperate with complementary locking means of the license plate holder in which at least one of the locking means is resilient, and which clips are to be received in the license plate holder at opposing corner points of a side of the license plate holder.

Suchlike license plate holder is known from the German Gebrauchsmuster DE-U-9400768. This known holder has clips with first and second protrusions, each provided with a hook, that are orientated perpendicular to the base plate of the holder when inserted in the holder. The hook of the first protrusion has a length three times the length of the hook of the second protrusion, which results in that the clip can only be inserted by first tilting the clip and inserting the first protrusion with the largest hook, whereafter the clip has to be tilted in opposite direction to get the second hook inserted. This tilting motion to get the clip inserted means that there always will be some space left between the clip and the license plate, so that the clip will not really clamp a license plate and prevent it from rattling. Furthermore both hooks engage the holder in a horizontal plane which is also cause for possible further rattling of the license plate.

The invention aims at removing these difficulties.

Accordingly, the invention provides for that the clips have a first curved portion, designed to abut against the inside of a raised side of the frame substantially perpendicular to the plane of the back plate, and a second portion substantially perpendicular to the first portion of the clip, the holder comprising one or more ribs parallel to the raised side to retain at least a part of a first portion of a clip in the space between the raised side and the ribs, and that the holder further comprises recesses in said raised side of the frame to receive a second part of a clip, said second portion having a recess to receive an extension of the raised side in said recesses in the frame to retain the second portion of a clip between an extension of the raised side and the faces of the frame against which a second portion of a clip abuts when snapped into the license plate holder.

The construction of the clip according to the invention, with a first curved portion and a second portion perpendicular to the first curved portion, in combination with an inserting direction perpendicular to the license plate holder ensures not only an easy insertion of the clip but also a very tight fit of the clip in the holder. As a consequence a license plate will be clamped tightly and completely rattle free.

Another very important advantage is that because of the very tight manner in which the clip is secured in the holder and the not easily accessible location of the resilient locking means, the license plate holder according to the invention is far better vandalism- and theft-proof than the known license plate holder.

Hereby one clip is preferably placed at each of the extremities of a long side, that has a bended inner curve boundary which has a weaker curvature then the corner of a license plate and which drops over that corner.

In order to achieve a well fitting and robust attachment of the clips, according to a further elaboration of the invention it can be provided that the holder contains at the clips protruding locating ridges, against which a backwards directed edge of a clip rests and over which the backside of the inner bend boundary lies. Consequently, the clip is, by way of its locking means at the one hand, and by way of these ridges at the other hand, practically immovably fixed.

In applying the invention an attractive exterior can be achieved without any complication by providing that the clips at their extremities at both sides of the angular points concerned, are contiguous to an uninterrupted frame surrounding the license plate.

Here in particular it can be provided that the frame at the corners where no clips are located, is shaped conforming to the shape of the inner bend boundary of the clips, whereby also preferably, the holder together with the clips forms an uninterrupted visible framing of the license plate.

An attachment or fixation of the edge of the license plate between both clips can be obtained by providing for a resilient holding device being placed between the clips, which yields when a license plate edge is pressed on it and which after passing of that edge snaps back into a position in which it secures the license plate.

The invention also provides for a clip to be applied to the license plate holder according to the invention. Such a clip is characterized in that it possesses a protrusion that comprises a component perpendicular to the plane of the rear wall, which protrusion has a locking surface that is substantially parallel to the said plane.

Preferably it is thereby provided that it includes a bended, protruding edge directed at the rear wall of the holder and parallel to it a surface with a curve radius that is greater than that of the license plate.

The invention will be further elucidated on the basis of the drawing, in which:
fig. 1 shows a view of one half of a license plate holder according to the invention;
fig. 2 shows a cross-section taken at the line II-II in fig. 1;
fig. 3 shows a cross-section taken at the line III-III of fig. 1;
fig. 4 shows an upper corner on larger scale;
fig. 4A shows a partial view in the direction of arrow A of fig. 4;
fig. 4B shows a cross-section taken at the line B-B of fig. 4;
fig. 4C shows a cross-section taken at the line C-C of fig. 4;
fig. 5 shows a clip seen from above;
fig. 5A shows a cross-section taken at the line A-A of fig. 5; and
fig. 5B a view of the clip.

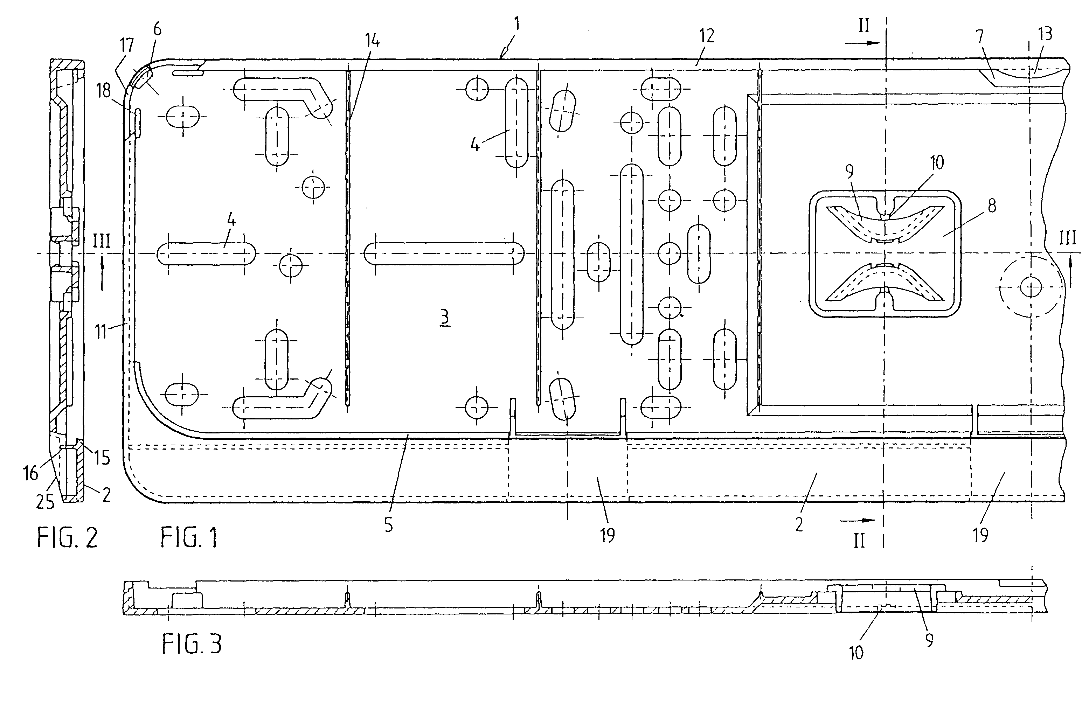

Fig. 1 represents the lefthand half of a license plate holder of which left and right half are each others mirror images.

The licence plate holder has at the lower side an edge 2, on which text and the like can be printed. Furthermore the license plate holder has a bottom 3 with holes 4 intended to let through screws with which the holder can be attached to a vehicle. Of course only some of these screw holes are made use of, but in order to fit different models of motor vehicles a relatively large number of such holes is necessary.

In the bottom a groove 5 is made which is visible along the upper side of the imprintable edge 2. At the angular points holes 6 are made and in the middle of the upper side a hole 7 is made. Such holes are often necessary to let through parts or punches of the mould, intended for the manufacturing of the license plate holder from artificial material.

Furthermore at 8 openings are made that are situated around clips 9, which are used to fix the license plate at the angular points. The shown embodiment has four clips, two of which are shown. Of the clips only two are needed, therefore the other two can be regarded as reserve. These clips are attached with the help of fracture connections 10 and can be easily pulled loose by hand.

The license plate holder has a peripheral edge, that consists in the wide lower edge 2 gradually converting into side edges 11, then at the upper angular points into parts of the clips, as will be described and at the upper side into an edge 12. This edge has in the middle of it a slightly yielding rounded lip 13.

On the bottom 3 are placed vertical ribs 14, whereby the spacing between the ribs in the middle is relatively large.

The wall of the imprintable edge 2 extends somewhat upwards at 15, below which is located a horizontal support rib 16 (see fig. 2). On 16, and kept in place by 15, a license plate can be laid, that fits in between the edges 11 and finds support at the upper side on the rounded lip 13. Because the ribs 14, situated at the lower side, are relatively far apart, it is possible, by making use of its flexibility, to place the license plate, by deflecting lip 13, till under this lip, which afterwards snaps back, constituting a rattlefree fixation.

At the angular points the edge 11 or 12 is narrowed to a narrower and moreover lower edge 17, at which, abutting to the continuation of the edge 11 or 12, a rib 18 is placed.

Finding support against ribs 18 and with a hook gripping behind an opening 6 in the narrowed wall 17, clips 9 are placed.

In 19 finally, flat openings are indicated that serve a better support of the edge 2 during printing on it. Furthermore they can facilitate the discharge of water, from rain or car washing for example. The side walls of the discharge openings are smooth and cannot have a locking function.

Fig. 3 shows at the left side a longitudinal cross-section taken at the line III-III.

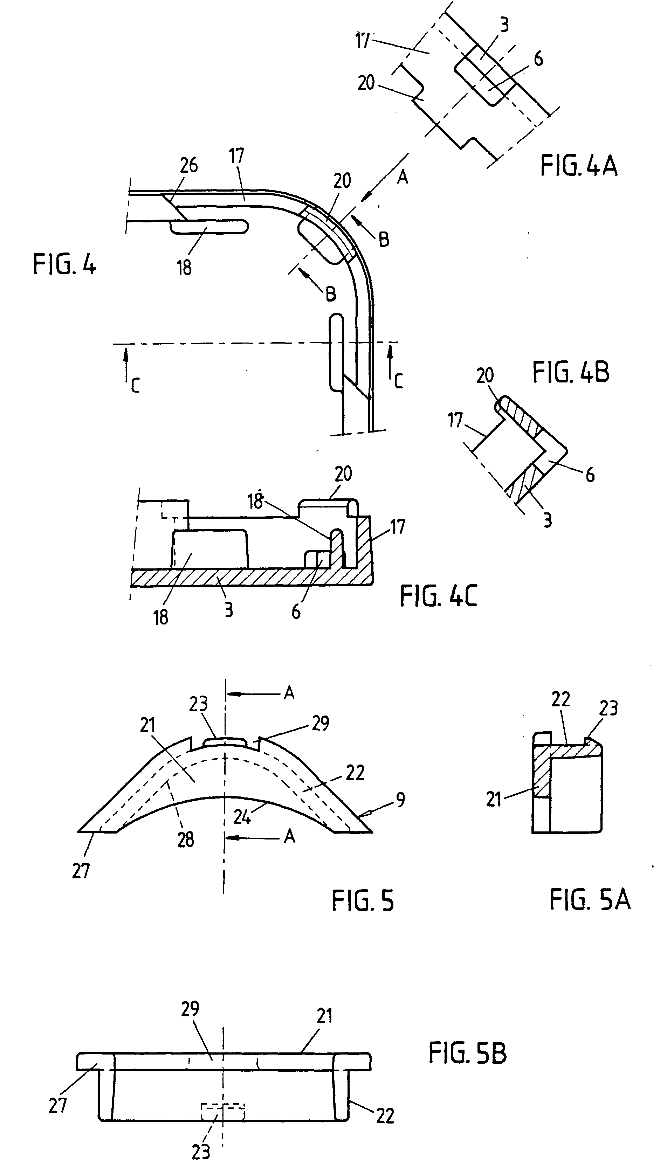

As is indicated more in particular in fig. 4, the narrowed and lowered edge 17 has an opening 6, behind which a hook element 23, to be described, of a clip can be hitched.

The upper wall of the edge 11 or 12 has a bevel 26 and the clip has a conformingly bevelled upper surface 27 (fig. 5).

As becomes clear especially from fig. 5, the clip has an upper surface 21 with an exterior rounding 28 that conforms to the rounding of the edge of the license plate holder and it has a downwards extending edge 22, that is brought between the parts 17 and the ribs 18 of the license plate holder (see fig. 4) while attaching the clip. In the upper surface 21 a recess 29 is made which is intended to receive an elevation 20 placed on the narrowed edge 17, when the clip is attached.

The backwards extending edge 22 of the clip has at 23 a hook-shaped protrusion, which can cooperate with the hind edge of the opening 6. When a clip is put into place and is being pushed in, the hook-shaped part through deforming the edge 22 will be slightly pushed inwards until it has passed the hind edge of the opening 6 after which it will spring outwards again. Therewith the downwards extending edge 22 is kept between edges 17 and 18, as a result of which the clip is completely fixed.

The inner boundary 24 of the clip has a larger curvature radius then an angular point of a license plate, in order for it to easily fit in under it. The rounded shape of the edge 22 constitutes a relatively great stiffness, causing the hook-shaped part 23 to be held stably in the position in had snapped back into.

In other respects the license plate holder of the invention is realized according to in themselves familiar ways, for instance by taking into account in the design of rear walls and edges that an easily clearable construction should result.

Generally, the license plate holder of the invention can be manufactured from artificial material, for instance polystyrene. The indicated shape is particularly favourable for imprinting of especially the lower edge 2 of the empty licence plate holder.

To give the license plate holder at the backside a bevel in itself is known as well (see 25 in fig. 2), which often makes adaptation possible to coach-works possessing a somewhat more recedingly placed license plate.

The invention provides a license plate holder which very much eases the insertion of a license plate as well as the attachment of it to a vehicle and the rattle-free holding thereof. The removal of a clip at the corners is possible, but relatively difficult since then either the clip has to be destroyed or, with the help of a special tool, the hook-shaped part 23 has to be pushed back.

An attractive exterior can be obtained when at both upper and lower corners an identical curved shape is obtained, in making the curvature (24) of the inner side of the clips identical to that of the transitional part of edge 2 into the side walls 11 or 12.

## Claims

1. License plate holder (1) for a vehicle of essentially rectangular shape with a short side and a long side, having a back plate (3) with a circumferential frame (2,11,12) and license plate support parts (14,18), the circumferential frame being provided with a recess (15,16) to receive an edge of a license plate along at least one of the long sides of the holder, and the space between the license plate support parts (14,18) and the recess (15,16) seen in a direction perpendicular to the plane of the back plate (3) being sufficient to receive a license plate, the license plate holder furthermore comprising resilient clips (9) to hold the license plate by dropping over a corner of the license plate, the clips (9) having locking means (23,29) which cooperate with complementary locking means (6,20) of the license plate holder in which at least one of the locking means (23) is resilient, and which clips (9) are to be received in the license plate holder (1) at opposing corner points of a side of the license plate holder, **characterized in that** the clips (9) have a first curved portion (22), designed to abut against the inside of a raised side (17) of the frame substantially perpendicular to the plane of the back plate (3), and a second portion (21) substantially perpendicular to the first portion (22) of the clip (9), the holder comprising one or more ribs (18) parallel to the raised side (17) to retain at least a part of a first portion (22) of a clip (9) in the space between the raised side (17) and the ribs (18), and that the holder further comprises recesses in said raised side (17) of the frame to receive a second part (21) of a clip (9), said second portion (21) having a recess (29) to receive an extension (20) of the raised side (17) in said recesses in the frame to retain the second portion (21) of a clip (9) between an extension (20) of the raised side (17) and the faces (26) of the frame against which a second portion (21,27) of a clip (9) abuts when snapped into the license plate holder.

2. License plate holder according to claim 1, **characterized in that** the ribs (18) are situated on the back plate (3) such that only the outer ends of the first part (22) of a clip are retained between the ribs (18) and the raised side (17), the complementary locking means (6,20) being situated in the middle of the corner and the middle of the clips, and one of the complementary locking means being a recess (6) in the raised side (17).

3. License plate holder according to claim 1-2, **characterized in that** the clips (9) at their extremities (27) at both sides of the angular points concerned, abut against an uninterrupted frame surrounding the license plate.

4. License plate holder according to claims 1-3, **characterized in that** a resilient holding member (13) is placed between the clips (9), which yields when a license plate edge is pressed on it and which after passing of that edge snaps back into a position in which it secures the license plate.

5. License plate holder according to one or more of claims 1-4, **characterized in that** the frame at the corners at which no clips are located has a shape conforming to the shape of the inner bend boundary of the clips (9).

6. License plate holder according to one or more of claims 1-5, **characterized in that** the frame together with the clips constitutes an uninterrupted visible framing of the license plate.

7. Clip to be applied in a holder according to claims 1-6, **characterized in that** it has a protrusion (22) with a component (21) perpendicular to the plane of the raised side (17), which protrusion (22) has a hook part (23) with a surface that is substantially parallel to said side.

8. Clip according to claim 7, **characterized in that** it has a curved extending edge (24), directed towards a license plate that is placed in the holder (1).

## Patentansprüche

1. Kennzeichenschildhalter (1) für ein Fahrzeug von im wesentlichen rechteckiger Gestalt mit einer kurzen Seite und einer langen Seite, der eine rückwärtige Platte (3) mit einem Umfangsrahmen (2, 11, 12) hat und Kennzeichenschildstützteile (14, 18), wobei der Umfangsrahmen mit einer Aussparung (15, 16) versehen ist, um eine Kante eines Kennzeichenschilds entlang mindestens einer der langen Seiten des Halters aufzunehmen, und der Raum zwischen den Kennzeichenschildstützteilen (14, 18) und der Aussparung (15, 16), gesehen in einer Richtung senkrecht zu der Ebene der rückwärtigen Platte (3) ausreichend ist, um ein Kennzeichenschild aufzunehmen, wobei der Kennzeichenschildhalter weiter elastische Klammern (9) umfasst, um das Kennzeichenschild zu halten, indem sie über eine Ecke des Kennzeichenschilds gestülpt werden, wobei die Klammern (9) Verriegelungsmittel (23, 29) haben, die mit komplementären Verriegelungsmitteln (6, 20) des Kennzeichenschildhalters zusammenwirken, wobei mindestens eines der Verriegelungsmittel (23) elastisch ist, und wobei die Klammern (9) in dem Kennzeichenschildhalter (1) an gegenüberliegenden Eckpunkten einer Seite des Kennzeichenschildhalters aufgenommen werden, **dadurch gekennzeichnet, dass** die Klammern (9) einen ersten gekrümmten Bereich (22) haben, der gestaltet ist, dass er gegen die Innenseite einer erhabenen Seite des Rahmens im wesentlichen senkrecht zur Ebene der rückwärtigen Platte (3) stößt, und einen zweiten Bereich (21), der im wesentlichen senkrecht zu dem ersten Bereich (22) der Klammer (9) ist, wobei der Halter eine oder mehrere Rippen (18) parallel zu der erhabenen Seite (17) umfasst, um mindestens einen Teil eines ersten Bereichs (22) einer Klammer (9) in dem Raum zwischen der erhabenen Seite (17) und den Rippen (18) zurückzuhalten, und dass der Halter weiter Aussparungen in der erhabenen Seite (17) des Rahmens umfasst, um einen zweiten Teil (21) einer Klammer (9) aufzunehmen, wobei der zweite Bereich (21) eine Aussparung (29) hat, um eine Verlängerung (20) der erhabenen Seite (17) in der Aussparung in dem Rahmen aufzunehmen, um den zweiten Bereich (21) einer Klammer (9) zwischen einer Verlängerung (20) der erhabenen Seite (17) und den Flächen (26) des Rahmens zurückzuhalten, gegen den ein zweiter Bereich (21, 27) einer Klammer (9) stößt, wenn sie in den Kennzeichenschildhalter eingeschnappt ist.

2. Kennzeichenschild nach Anspruch 1, dadurch gekennzeichnet, dass sich die Rippen (18) auf der rückwärtigen Platte (3) so befinden, dass nur die äußeren Enden des ersten Teils (22) einer Klammer zwischen den Rippen (18) und der erhabenen Seite (17) zurückgehalten werden, die komplementären Verriegelungsmittel (6, 20) sich in der Mitte der Ecke und der Mitte der Klammern befinden, und eines der komplementären Verriegelungsmittel eine Aussparung (6) in der erhabenen Seite (17) ist.

3. Kennzeichenschildhalter nach Anspruch 1 bis 2, dadurch gekennzeichnet, dass die Klammern (9) an ihren äußeren Enden (27) an beiden Seiten der betroffenen Winkelpunkte gegen einen ununterbrochenen Rahmen stoßen, der das Kennzeichenschild umfasst.

4. Kennzeichenschildhalter nach Ansprüchen 1 bis 3, dadurch gekennzeichnet, dass ein elastisches Halteelement (13) zwischen die Klammern (9) platziert ist, das nachgibt, wenn eine Kennzeichenschildkante auf es gedrückt wird, und das nach dem Durchführen dieser Kante zurück in eine Position schnappt, in der es die Kennzeichenschildplatte befestigt.

5. Kennzeichenschildhalter nach einem oder mehreren der Ansprüche 1 bis 4, dadurch gekennzeichnet, dass der Rahmen an den Ecken, an denen sich keine Klammern befinden, eine Gestalt hat, die der Gestalt der inneren gebogenen Grenze der Klammer (9) entspricht.

6. Kennzeichenschildhalter nach einem oder mehreren der Ansprüche 1 bis 5, dadurch gekennzeichnet, dass der Rahmen zusammen mit den Klammern einen als ununterbrochen zu sehenden Rahmen des Kennzeichenschilds bildet.

7. Klammer, die in einem Halter nach Ansprüchen 1 bis 6 anzuwenden ist, dadurch gekennzeichnet, dass sie einen Vorsprung (22) mit einer Komponente (21) senkrecht zu der Ebene der erhabenen Seite (17) hat, wobei der Vorsprung (22) einen Hakenteil (23) hat mit einer Oberfläche, die im wesentlichen parallel zu der Seite ist.

8. Klammer nach Anspruch 7, dadurch gekennzeichnet, dass sie eine gekrümmte sich erstreckende Kante (24) hat, die in Richtung auf ein Kennzeichenschild gerichtet ist, das in dem Halter (1) platziert wird.

## Revendications

1. Support de plaque d'immatriculation (1) pour un véhicule, de forme essentiellement rectangulaire avec un côté cours et un côté long, comportant une plaque arrière (3) avec un cadre circonférentiel (2, 11, 12) et des parties de support de plaque d'immatriculation (14, 18), le cadre circonférentiel étant pourvu d'un évidement (15, 16) afin de recevoir un bord d'une plaque d'immatriculation le long d'au moins l'un des côtés longs du support, et l'espace entre les parties de support de plaque d'immatriculation (14, 18) et l'évidement (15, 16) vu dans une direction perpendiculaire au plan de la plaque arrière (3) étant suffisant pour recevoir une plaque d'immatriculation, le support de plaque d'immatriculation comprenant, de plus, des agrafes élastiques (9) afin de maintenir la plaque d'immatriculation en recouvrant un coin de la plaque d'immatriculation, les agrafes (9) comportant des moyens de verrouillage (23, 29) qui coopèrent avec des moyens de verrouillage complémentaires (6, 20) du support de plaque d'immatriculation, dans lequel au moins l'un des moyens de verrouillage (23) est élastique, et lesquelles agrafes (9) doivent être reçues dans le support de plaque d'immatriculation (1) au niveau de points de coins opposés d'un côté du support de plaque d'immatriculation, caractérisé en ce que les agrafes (9) comportent une première partie incurvée (22), conçue de manière à venir en butée contre l'intérieur d'un côté surélevé (17) du cadre sensiblement perpendiculaire au plan de la plaque arrière (3), et une seconde partie (21) sensiblement perpendiculaire à la première partie (22) de l'agrafe (9), le support comprenant une ou plusieurs nervures (18) parallèles au côté surélevé (17) afin de retenir au moins une partie d'une première partie (22) d'une agrafe (9) dans l'espace entre le côté surélevé (17) et les nervures (18), et en ce que le support comprend, de plus, des évidements dans ledit côté surélevé (17) du cadre afin de recevoir une seconde partie (21) d'une agrafe (9), ladite seconde partie (21) comportant un évidement (29) afin de recevoir une extension (20) du côté surélevé (17) dans lesdits évidements dans le cadre afin de retenir la seconde partie (21) d'une agrafe (9) entre une extension (20) du côté surélevé (17) et les faces (26) du cadre contre lequel une seconde partie (21, 27) d'une agrafe (9) vient en butée lorsqu'elle est encliquetée dans le support de plaque d'immatriculation.

2. Support de plaque d'immatriculation selon la revendication 1, caractérisé en ce que les nervures (18) sont situées sur la plaque arrière (3), de sorte que seules les extrémités extérieures de la première partie (22) d'une agrafe soient retenues entre les nervures (18) et le côté surélevé (17), les moyens de verrouillage complémentaires (6, 20) étant situés au centre du coin et au centre des agrafes, et l'un des moyens de verrouillage complémentaires étant un évidement (6) dans le côté surélevé (17).

3. Support de plaque d'immatriculation selon les revendications 1 et 2, caractérisé en ce que les agrafes (9), au niveau de leurs extrémités (27) des deux côtés des points angulaires concernés, viennent en butée contre un cadre ininterrompu entourant la plaque d'immatriculation.

4. Support de plaque d'immatriculation selon les revendications 1 à 3, caractérisé en ce qu'un élément de maintien élastique (13) est placé entre les agrafes (9), qui fléchit lorsqu'un bord de la plaque d'immatriculation est pressé sur celui-ci et qui, après le passage de ce bord, revient à une position dans laquelle il fixe la plaque d'immatriculation.

5. Support de plaque d'immatriculation selon une ou plusieurs des revendications 1 à 4, caractérisé en ce que le cadre, au niveau des coins auxquels aucune agrafe n'est située, présente une forme correspondant à la forme de la limite incurvée intérieure des agrafes (9).

6. Support de plaque d'immatriculation selon une ou plusieurs des revendications 1 à 5, caractérisé en ce que le cadre et les agrafes constituent un encadrement visible ininterrompu de la plaque d'immatriculation.

7. Agrafe à appliquer à un support selon les revendications 1 à 6, caractérisée en ce qu'il comporte une saillie (22) avec un composant (21) perpendiculaire au plan du côté surélevé (17), laquelle saillie (22) comporte une partie de crochet (23) avec une surface qui est sensiblement parallèle audit côté.

8. Agrafe selon la revendication 7 caractérisée en ce qu'elle comporte un bord s'étendant de manière incurvée (24), dirigé vers une plaque d'immatriculation qui est placée dans le support (1).
